# EUROPEAN PATENT APPLICATION

(11) **EP 4 439 853 A1**
(43) Date of publication of application: **02.10.2024**
(21) Application number: 22929658.7
(22) Date of filing: 26.12.2022
(51) Int. Cl.: H01M 50/569

(54) **BATTERY CELL ASSEMBLY, BATTERY PACK, AND VEHICLE**

(30) Priority: 04.03.2022 CN 202210209506
(71) Applicant: BYD Company Limited, Shenzhen, Guangdong 518118 (CN)
(72) Inventor: CHEN, Weijia, Shenzhen, Guangdong 518118 (CN); LU, Peng, Shenzhen, Guangdong 518118 (CN); WAN, Long, Shenzhen, Guangdong 518118 (CN); PENG, Qingbo, Shenzhen, Guangdong 518118 (CN); ZHU, Liequn, Shenzhen, Guangdong 518118 (CN)
(74) Representative: Dehns Germany Partnerschaft mbB
(86) International application number: PCT/CN2022/141918
(87) International publication number: WO 2023/165234

(57) **Abstract**

A battery cell assembly, a battery pack, and a vehicle are provided. The battery cell assembly includes at least two battery cells, a battery cell bracket, a flexible circuit board, and a connecting sheet. The at least two battery cells are disposed in a butt joint mode along the length direction of the battery cells. The battery cell bracket is connected at a junction position between adjacent battery cells. The flexible circuit board is disposed on the top surface of the battery cell. The connecting sheet is fixed on the battery cell bracket, the connecting sheet is connected to tabs of the battery cells and the flexible circuit board, the connecting sheet has a sampling section, and the sampling section is located on the top surfaces of the battery cells and is configured to be connected to an external sampling device to sample the battery cells.

## Description

### CROSS-REFERENCE TO RELATED APPLICATIONS

The present disclosure claims priority to Chinese Patent Application No. 202210209506.8 filed on March 4, 2022 and entitled "BATTERY CELL ASSEMBLY, BATTERY PACK, AND VEHICLE", which is incorporated herein by reference in its entirety.

### FIELD

The present invention relates to the field of energy storage equipment, and in particular to a battery cell assembly, battery pack, and vehicle.

### BACKGROUND

With the increasing promotion of new energy vehicles in China, pure electric vehicles with green environmentally friendly characteristics have become an inevitable trend in the future development of the automotive industry. It will gradually replace traditional fuel vehicles as the daily transportation tool for ordinary people. The power source of electric vehicles is lithium battery packs. As an important component of electric vehicles, the improvement of various performances of lithium battery packs has always been a focus in the industry. For example, how to design the structure of lithium battery pack to make the distribution of components inside the battery packs more reasonable, save space, and have a more compact structure, is a technical issue worthy of improvement in the industry.

### SUMMARY

The present disclosure provides a battery cell assembly, a battery pack, and a vehicle.

According to the first aspect of the present disclosure, there is provided a battery cell assembly including:
at least two battery cells which are disposed in a butt joint mode along the length direction of the battery cells;
a battery cell bracket connected at a junction position between adjacent battery cells;
a flexible circuit board disposed on the top surfaces of the battery cells; and
a connecting sheet, which is fixed on the battery cell bracket, connected to the tabs of the battery cell and the flexible circuit board, and provided with a sampling section, which is located on the top surface of the battery cell and is configured to be connected to an external sampling device to sample the battery cells.

In an embodiment, the connecting sheet further includes a connecting section, the connection between the connecting segment and the sampling segment is a bent connection at a predetermined angle; the connecting section is connected to the tabs of the battery cell, and the sampling section is connected to the flexible circuit board.

In an embodiment, the length of the connecting section is greater than the length of the sampling section.

In an embodiment, the battery cell bracket is provided with a buckle and the connecting sheet is provided with a slot, or the battery cell bracket is provided with a slot and the connecting sheet is provided with a buckle; the battery cell bracket is snapped to the connecting sheet through the buckle and the slot.

In an embodiment, the battery cell bracket is provided between the two adjacent battery cells, and is disposed with a first connecting portion and a second connecting portion, the first connecting portion is connected to one of the two adjacent battery cells, and the second connecting portion is connected to the other of the two adjacent battery cells.

In an embodiment, the connecting sheet is fixed between the first connecting portion and the second connecting portion.

In an embodiment, a first battery cell bracket and a second battery cell bracket are disposed between the two adjacent battery cells, and the first battery cell bracket and the second battery cell bracket are arranged along the length direction of the battery cells;
the first battery cell bracket and the second battery cell bracket are both provided with a connecting portion, the first battery cell bracket is connected to one of the two adjacent battery cells through its connecting portion, and the second battery cell bracket is connected to the other of the two adjacent battery cells through its connecting portion; and
the first battery cell bracket and the second battery cell bracket are connected by side faces close to each other.

In an embodiment, the connecting sheet is fixed at the position where the first battery cell bracket and the second battery cell bracket are connected to each other.

According to the second aspect of the present disclosure, there is provided a battery pack. The battery pack includes the battery cell assembly as described in the first aspect.

According to the third aspect of the present disclosure, there is provided a vehicle. The vehicle includes the battery pack as described in the second aspect.

Further features of the present disclosure and advantages thereof will become apparent from the following detailed description of exemplary embodiments of the present disclosure with reference to the accompanying drawings.

### BRIEF DESCRIPTION OF THE DRAWINGS

The accompanying drawings are incorporated in the description and forming a part of the description to illustrate embodiments of the present disclosure, and are used together with their brief description to explain the principles of the present disclosure.
FIG 1 is a schematic diagram of the structure of a battery cell assembly according to an embodiment of the present disclosure.
FIG 2A is a schematic diagram of the connection structure between the battery cell bracket and the connecting sheet in the battery cell assembly according to an embodiment of the present disclosure.
FIG 2B is a schematic diagram of the connection structure between the battery cell bracket and the connecting sheet in the battery cell assembly according to an embodiment of the present disclosure.
FIG 3 is a schematic diagram of the structure of a battery pack according to an embodiment of the present disclosure.
FIG 4 is a schematic diagram of the structure of a vehicle according to an embodiment of the present disclosure.

### Description of the reference signs:

10- battery cell assembly; 101- battery cell; 101a - first battery cell; 101b - second battery cell; 1011 tab; 1012- top surface of the battery cell; 1013- side surface of the battery cell; 102- battery cell bracket; 102a - first battery cell bracket; 102b - second battery cell bracket; 1021- first connecting portion; 1022- second connecting portion; 103- flexible circuit board; 104- connection sheet; 1041- sampling section; 1042- connection section; 105-connection structure; 106- buckle; 107- slot; 20- battery pack; 30- vehicles.

### DETAILED DESCRIPTION

Various exemplary embodiments of the present disclosure will now be described in detail with reference to the accompanying drawings. It should be noted that the relative arrangements of the components and steps, numerical expressions, and numerical values set forth in these embodiments do not limit the scope of the present disclosure unless specifically stated otherwise.

The following description of at least one exemplary embodiment is merely illustrative in nature and in no way serves as any limitation on the present disclosure and its application or uses.

Techniques, methods, and devices known to a person skilled in the art may not be discussed in detail but, where appropriate, should be considered part of description.

In all examples shown and discussed herein, any specific value is to be interpreted as merely exemplary, and not as limitation. Other examples of exemplary embodiments may, accordingly, have different values.

It should be noted that similar numerals and letters represent similar items in following drawings, and therefore, once item is defined in one drawing; further discussion thereof is not required in subsequent drawing.

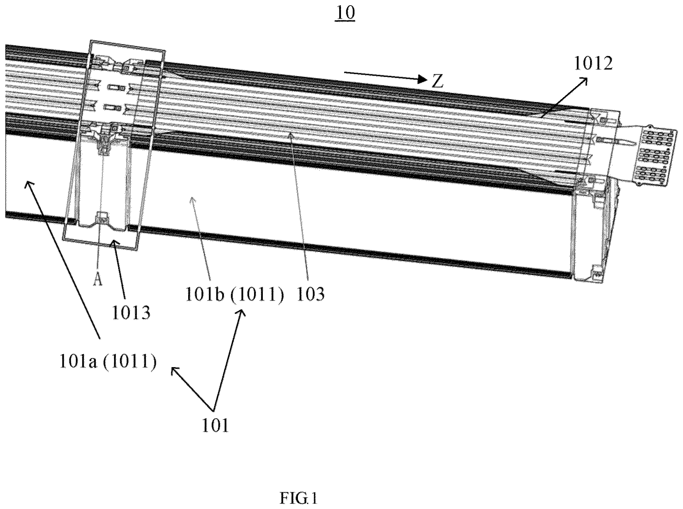

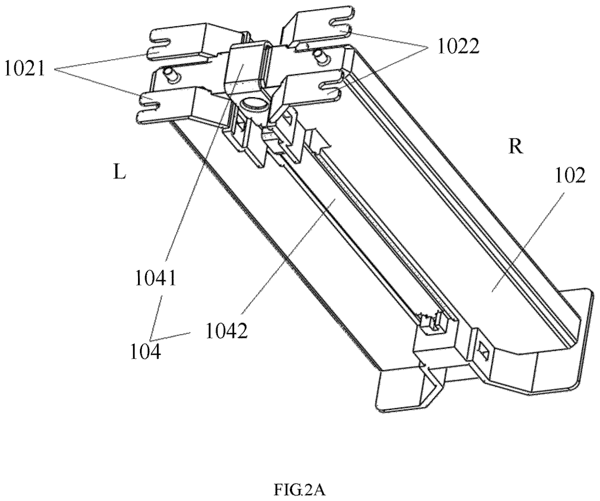

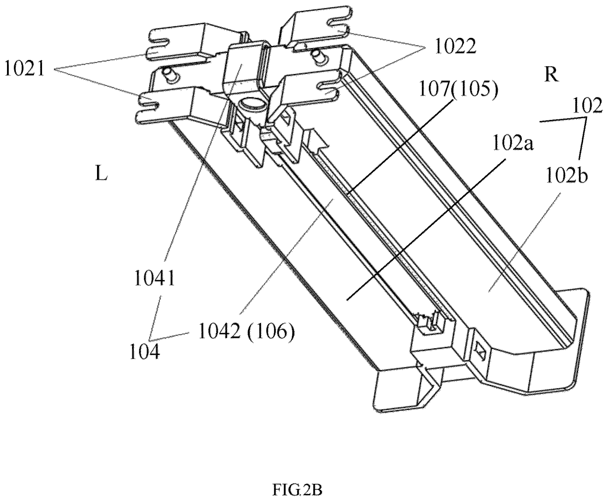

Referring to FIGS. 1, 2A, and 2B, according to one embodiment of the present disclosure, a battery cell assembly 10 is provided. The battery cell assembly 10 includes at least two battery cells 101, a battery cell bracket 102, a flexible circuit board 103, and a connecting sheet 104. At least two battery cells 101 are disposed in a butt j oint mode along the length direction of the battery cells. The battery cell bracket 102 is connected at a junction position between two adjacent battery cells 101. The flexible circuit board 103 is disposed on the top surface 1012 of the battery cell 101. The connecting sheet 104 is fixed on the battery cell bracket 102, and is connected to the tabs 1011 of the battery cell 101 and the flexible circuit board 103. The connecting sheet 104 has a sampling section 1041, which is located on the top surface 1012 of the battery cell 101, and is configured to be connected to an external sampling device to sample the battery cell 101.

The tab 1011 of battery cell 101 refers to a metal conductive body that leads out the positive or negative electrode from battery cell 101. In present disclosure, the tab 1011 is led out from the side surface of the battery cell 101 shown in FIG 1. In addition, the flexible circuit board 103 and the battery cell 101 can have a one-to-one correspondence or a one-to-many relationship. In other words, the top surface of one battery cell 101 is provided with a flexible circuit board 103, or the top surface of multiple battery cells 101 is provided with a flexible circuit board 103, which is not limited in present disclosure.

In the battery cell assembly provided in the embodiments of the present disclosure, at least two battery cells 101 are disposed in a butt joint mode along the length direction. In some embodiments, at least two battery cells 101 are disposed in series. In some embodiments, multiple battery cells 101 can be first connected in parallel along the thickness direction to form a battery cell string, and then multiple battery cell strings can be connected in series along the length direction. When sampling the battery cell 101, connect the sampling device to the sampling section 1041 of the connecting sheet 104. As the connecting sheet 104 is connected to the tabs 1011 of the battery cell 101 and the flexible circuit board 103, the sampling device can form an electrical connection relationship with the tabs 1011 of the battery cell 101 and the flexible circuit board 103, thereby collecting parameters such as temperature and voltage of the battery cell 101. In the battery cell assembly provided in the embodiments of the present disclosure, the sampling section 1041 of the connecting sheet 104 and the flexible circuit board 103 are both set on the top surface 1012 of the battery cell 101. Since there would otherwise be space along the thickness direction of the battery cell in the battery pack, setting the sampling section 1041 of the connecting sheet 104 and the flexible circuit board 103 at the position of the top surface of the battery cell 101 (i.e., setting the sampling point A at the position of the top surface of the battery cell 101) will not occupy additional space inside the battery pack. If the position of sampling point A is set at the end surface of the battery cell 101 along the length direction (i.e. one side of the battery cell 101 along the length direction shown in FIG 1), it will occupy the dimensional space along the length direction of the battery cell, which is not conducive to the compact design of the battery pack. Therefore, in the battery cell assembly provided in the embodiments of the present disclosure, the sampling section of the connecting sheet and the flexible circuit board are both set at the position of the top surface of the battery cell, which is conducive to saving space inside the battery pack and thus facilitating the compact design of the battery pack.

In some embodiments, the material of the battery cell bracket 102 may be plastic. In some embodiments, the material of the connecting sheet 104 may be metal.

Referring to FIGS. 1, 2A, and 2B, in some embodiments, the connecting sheet 104 further includes a connecting section 1042, and the connection between the connecting segment 1042 and the sampling segment 1041 is a bent connection at a predetermined angle; the connecting section 1042 is connected to the tabs 1011 of the battery cell 101, and the sampling section 1041 is connected to the flexible circuit board 103.

In some embodiments, the connecting sheet 104 is bent at a predetermined angle to form two sub connecting sheets, namely the sampling section 1041 and the connecting section 1042. In other words, the connection between the sampling segment 1041 and the connecting segment 1042 is a bent connection. The predetermined angle can be designed according to the actual structural needs, for example, a predetermined angle of 90° , it is not limited in present disclosure. After fixing the connecting sheet 104 and the battery cell bracket 102, the sampling section 1041 is disposed at the position of the top surface of the battery cell 101, while the connecting section 1042 is disposed at the position of the side surface of the battery cell 101. It should be noted that the terms "top surface of cell 101" and "side surface of cell 101" here refer to the perspective of battery cell assembly 10 shown in FIG 1, namely the top surface 1012 and side surface 1013 of the battery cell. In present disclosure, the connecting sheet 104 is bent at a predetermined angle to form two sub connecting sheets, which facilitates the connection of the connecting sheet 104 to the tabs 1011 of the battery cell 101 and the flexible circuit board 103, respectively.

Referring to FIGS. 1, 2A, and 2B, in some embodiments, the length of the connecting segment 1042 is greater than the length of the sampling segment 1041.

In some embodiments, the sampling section 1041 is extended along the thickness direction of the battery cell bracket 102, and the connecting section 1042 is extended along the length direction of the battery cell bracket 102. As the longer length of the connection section 1042, the connection structure 105 connecting the connecting sheet 104 and the battery cell bracket 102 can be disposed on the connection section 1042. For example, as shown in FIGS. 1, 2A, and 2B, in some embodiments, one of the battery cell bracket 102 and the connecting sheet 104 is provided with a buckle 106, while the other is provided with a slot 107. That is, the battery cell bracket 102 is provided with a buckle 106 and the connecting sheet 104 is provided with a buckle 107, or the battery cell bracket 102 is provided with a buckle 107 and the connecting sheet 104 is provided with a buckle 106. The battery cell bracket 102 is snapped to the connecting sheet 104 through the buckle and the slot. If the slot is provided on the connection sheet 104 and the buckle is provided on the battery bracket 102, the slot can be opened on the connecting section 1042 of the connecting sheet 104.

Furthermore, the connecting sheet 104 is connected to the battery cell bracket 102 in the form of a snap-fit connection, which is very convenient to operate during the assembly process. Simply press the connecting sheet 104 and snap-fit onto the battery cell bracket 102. This not only ensures a stable connection between the connecting sheet 104 and the battery cell bracket 102, but also saves the time of applying adhesive and tightening bolts, simplifying the assembly process and improving production efficiency.

Referring to FIGS. 1 and 2A, in some embodiments, a battery cell bracket 102 is provided between adjacent battery cells 101. The battery bracket 102 is provided with a first connecting portion 1021 and a second connecting portion 1022, the first connecting portion 1021 is connected to one of the two adjacent battery cells 101, and the second connecting portion 1022 is connected to the other of the two adjacent battery cells 101. Furthermore, the connecting sheet 104 is fixed at a position between the first connecting portion 1021 and the second connecting portion 1022.

In this specific example, a battery cell bracket 102 is simultaneously connected to two adjacent battery cells 101 along the length direction, that is, a battery cell bracket 102 is simultaneously connected to two battery cells 101 that are disposed in a butt joint mode along the length direction of the battery cells 101. Furthermore, for example, if the two adjacent battery cells 101 mentioned above are the first battery cell 101a and the second battery cell 101b, then one battery cell bracket 102 is connected to the first battery cell 101a and the second battery cell 101b, respectively. Referring to FIG 2A, the left side L and the right side R of the connecting sheet 104 are the same battery cell bracket 102. Furthermore, the first connecting portion 1021 and the second connecting portion 1022 may, for example, be in an inserted tooth structure (with a U-shaped notch), and therefore, the first connecting portion 1021 and the second connecting portion 1022 can make plug-in connection with the battery cell 101 (how they plug-in). Furthermore, in order to achieve a more stable connection relationship between the battery cell bracket 102 and the battery cell 101, two first connection portions 1021 and two second connection portions 1022 can be respectively set on the battery cell bracket 102, which means there are four connection portions in total. For example, two first connecting portions 1021 are connected to the first battery cell 101a, and two second connecting portions 1022 are connected to the second battery cell 101b. After connecting the battery cell bracket 102 to the battery cell, install the connecting sheet 104 at the middle position along the length direction of the battery cell bracket 102. It can be seen that the assembly process of a battery cell bracket 102 is simple and easy to operate.

Furthermore, the first connecting portion 1021 and the second connecting portion 1022 can be provided on two opposite sides of the battery cell bracket 102 along the length direction (such as the Z direction) of the battery cell 101, namely the left side and the right side of the battery cell bracket 102 as shown in FIG 2A.

In order to facilitate the arrangement of the first connecting portion 1021 and the second connecting portion 1022, as shown in FIG 2A, one set of first connecting portions 1021 and the second connecting portions 1022 can be disposed at the front side of the battery bracket 102, while another set of first connecting portions 1021 and the second connecting portions 1022 can be disposed at the rear side of the battery bracket 102. The two first connecting portions 1021 are respectively disposed on the two opposite sides of the battery cell bracket 102 along the thickness direction of the battery cell 101; similarly, the two second connecting portions 1022 are respectively disposed on the two opposite sides of the battery cell bracket 102 along the thickness direction of the battery cell 101. This not only facilitates the arrangement of two first connecting portions 1021 and two second connecting portions 1022, but also can sandwich the connecting sheet 104 between one set of first connecting portions 1021 and second connecting portions 1022. The width of the connecting sheet 104 matches the distance between the first connecting portions 1021 and the second connecting portions 1022, which is conducive to positioning the installation of the connecting sheet 104.

Referring to FIGS. 1 and 2B, in some embodiments, a first battery cell bracket 102a and a second battery cell bracket 102b are provided between adjacent battery cells 101. The first battery cell bracket 102a and the second battery cell bracket 102b are arranged along the length direction of the battery cell 101. One of the two battery cell brackets is provided with a first connecting portion 1021, while the other is provided with a second connecting portion 1022. That is, the first battery cell bracket 102a is provided with a first connecting portion 1021 and the second battery cell bracket 102b is provided with a second connecting portion 1022, or the first battery cell bracket 102a is provided with a second connecting portion 1022 and the second battery cell bracket 102b is provided with a first connecting portion 1021. The first connecting portion 1021 is connected to one of the two adjacent battery cells 101, and the second connecting portion 1022 is connected to the other of the two adjacent battery cells 101. The first battery cell bracket 102a and the second battery cell bracket 102b are connected by side faces close to each other. Furthermore, the connecting sheet 104 is fixed at the position where the first battery cell bracket 102a and the second battery cell bracket 102b are connected to each other.

In this specific example, the first battery cell bracket 102a and the second battery cell bracket 102b are respectively connected to two adjacent battery cells 101 along the length direction. More specifically, for example, two adjacent battery cells 101 include a first battery cell 101a and a second battery cell 101b, one of the two battery cell brackets (such as the first battery cell bracket 102a) is connected to the first battery cell 101a, and the other of the two battery cell brackets (such as the second battery cell bracket 102b) is connected to the second battery cell 101b. These two battery cell brackets can be connected to each other by, for example, bonding, and the connecting sheet 104 is fixed at the junction of the two battery cell brackets, that is, referring to FIG 2B, the left side L and the right side R of the connecting sheet 104 are two battery cell brackets. The assembly process of the arrangement of two battery cell brackets may be slightly more complex, but it can save some raw materials for making battery cell brackets 102. Specifically, compared to the arrangement of one battery cell bracket mentioned above, when two battery cell brackets 102 are arranged, the volume of a single battery cell bracket 102 is smaller and using less materials. For example, if the connection portion on one battery cell bracket 102 is damaged, the battery cell bracket 102 is subject to scrapping out of use. Therefore, scrapping a battery cell bracket of smaller volume can save raw materials to a certain extent compared to scrapping a battery cell bracket of larger volume.

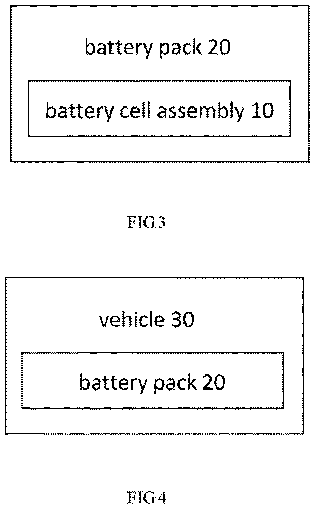

According to some embodiments of the present disclosure, a battery pack 20 is provided. As shown in FIG 3, the battery pack includes the battery cell assembly 10 as described above.

According to some embodiments of the present disclosure, a vehicle 30 is provided. As shown in FIG 4, the vehicle includes the battery pack 20 as described above. The vehicle also includes loads (such as motors) connected to the battery pack mentioned. The battery pack is used to power the load.

The focus of the previous embodiments is on the differences between each embodiment. Optimized features that differ from one embodiment to another may be combined to form preferred embodiment as long as they do not contradict, which is not repeated here in view of brevity of text.

While certain specific embodiments of the present disclosure have been described in detail by way of example, however, those skilled in the art will appreciate that the above examples are for illustrative purposes only and are not intended to limit the scope of the present disclosure. Those skilled in the art will appreciate that modifications may be made to the above embodiments without departing from the scope and spirit of the present disclosure. The scope of the present disclosure is defined by the appended claims.

## Claims

1. A battery cell assembly (10), comprising:
at least two battery cells (101), at least two of the battery cells (101) being disposed in a butt joint mode along the length direction of the battery cells (101);
a battery cell bracket (102), the battery cell bracket (102) being connected at a junction position between the two adjacent battery cells (101);
a flexible circuit board (103), the flexible circuit board (103) being disposed on the top surface (1012) of the battery cell (101); and
a connecting sheet (104), the connecting sheet (104) being fixed on the battery cell bracket (102), the connecting sheet (104) being connected to a tab (1011) of the battery cell (101) and the flexible circuit board (103), and the connecting sheet (104) having a sampling section (1041), wherein the sampling section (1041) is located on the top surface (1012) of the battery cell (101) and is configured to be connected to an external sampling device to sample the battery cells (101).

2. The battery cell assembly according to claim 1, wherein the connecting sheet (104) further comprises a connecting section (1042), and the connection between the connecting segment (1042) and the sampling segment (1041) is a bent connection at a predetermined angle; the connecting section (1042) is connected to the tab (1011) of the battery cell (101), and the sampling section (1041) is connected to the flexible circuit board (103).

3. The battery cell assembly according to claim 2, wherein the length of the connecting section (1042) is greater than the length of the sampling section (1041).

4. The battery cell assembly according to claim 1, wherein the battery cell bracket (102) is provided with a buckle (106) and the connecting sheet (104) is provided with a slot (107), or the battery cell bracket (102) is provided with a slot (107) and the connecting sheet (104) is provided with a buckle (106); the battery cell bracket (102) is snapped to the connecting sheet (104) through the buckle (106) and the slot (107).

5. The battery cell assembly according to claim 1, wherein the battery cell bracket (102) is disposed between the two adjacent battery cells (101), the battery cell bracket (102) being provided with a first connecting portion (1021) and a second connecting portion (1022), the first connecting portion (1021) being connected to one of the two adjacent battery cells (101), and the second connecting portion (1022) being connected to the other of the two adjacent battery cells (101).

6. The battery cell assembly according to claim 5, wherein the connecting sheet (104) is fixed between the first connecting portion (1021) and the second connecting portion (1022).

7. The battery cell assembly according to claim 1, wherein a first battery cell bracket (102a) and a second battery cell bracket (102b) are disposed between the two adjacent battery cells (101), and the first battery cell bracket (102a) and the second battery cell bracket (102b) are arranged along the length direction of the battery cells (101);
the first battery cell bracket (102a) and the second battery cell bracket (102b) are both provided with a connecting portion, wherein the first battery cell bracket (102a) is connected to one of the two adjacent battery cells (101) through its connecting portion, and the second battery cell bracket (102b) is connected to the other of the two adjacent battery cells (101) through its connecting portion; and the first battery cell bracket (102a) and the second battery cell bracket (102b) are connected by side faces close to each other.

8. The battery cell assembly according to claim 7, wherein the connecting sheet (104) is fixed at the position where the first battery cell bracket (102a) and the second battery cell bracket (102b) are connected to each other.

9. A battery pack (20), comprising the battery cell assembly (10) according to any one of claims 1-8.

10. A vehicle (30), comprising the battery pack (20) according to claim 9.
